Europäisches Patentamt

**European Patent Office**

**Office européen des brevets**

(11) Publication number: **0 246 880**
**A2**

# EUROPEAN PATENT APPLICATION

(21) Application number: **87304491.1**

(22) Date of filing: **20.05.87**

(51) Int. Cl.³: **B 44 B 5/00**

(30) Priority: **20.05.86 ZA 863750**

(43) Date of publication of application:
**25.11.87** Bulletin **87/48**

(84) Designated Contracting States:
**AT BE CH DE ES FR GB GR IT LI LU NL SE**

(71) Applicant: **UNITED REFLECTIVE CONVERTERS (PROPRIETARY) LIMITED**
**78 Maraisburg Road**
**Industria Johannesburg Transvaal(ZA)**

(72) Inventor: **Smit, Hendrik Adriaan 10 Stamperboom Street**
**Weltevreden Park Extension 12**
**Roodeport Transvaal(ZA)**

(72) Inventor: **Chagan, Nizarali Peerbhai**
**15 Multan Street Claudius**
**Pretoria Transvaal(ZA)**

(74) Representative: **Perry, Robert Edward et al,**
**GILL JENNINGS & EVERY 53-64 Chancery Lane**
**London WC2A 1HN(GB)**

(54) Embossing of plates.

(57) A method for embossing a plate, particularly a vehicle registration plate, is disclosed which includes the steps of providing a prepainted blank plate and a sheet of a light reflective material of which the one face is coated with an activatable adhesive, the sheet being of the exact size and configuration which it is intended to have in the finally embossed plate; locating the sheet on the plate in the exact position it is to occupy on the finally embossed plate; embossing the required characters in the plate in a manner so that the reflective sheet material is cut through all along the peripheries of the embossed characters; removing the cut out parts of the sheet from the plate; and activating the adhesive in a manner to cause the sheet to adhere to the plate. Also disclosed is apparatus for performing the method, and the combination of a blank plate and light reflective sheet intended for use with the method of the invention.

EP 0 246 880 A2

Croydon Printing Company Ltd.

THIS invention relates to the embossing of plates, particularly vehicle registration plates.

It is known to provide an embossed vehicle registration plate in which the embossed characters have been pressed into a pre-painted blank plate in a manner so that the material of the plate projects through correspondingly shaped cut out parts in a sheet of reflective material which is secured to one face of the plate, and many methods and means have hitherto been suggested for manufacturing such a plate. It will be appreciated that such arrangements provide a substantially one stage operation for making embossed plates in which the embossed characters are a colour different to that of their background.

One such a known arrangement is, for example, described in South African Patent no. 83/6064 which discloses a method and apparatus by means of which a sheet of reflective material, of which the one face is coated with a heat sensitive adhesive, is secured prior to the embossing operation in a first stage heating operation to the blank in those areas other than the ones which will contain the embossed characters. The plate and sheet are then embossed in a manner so that those parts of the sheet immediately above each of the embossed characters are cut out and removed from the sheet, whereafter the rest of the sheet is secured to the plate in a second heating operation.

The purpose of the first stage heating operation is to provide blank plates to which the reflected sheets are partly tacked and which can be utilised in those instances where the subsequent embossing operation has to be performed at a later stage at a place which could be located elsewhere than the one where the first stage operation was performed. The arrangement accordingly ensures that during such subsequent embossing operation the reflective sheet and blank plate are located in the exact interrelationship which is required in order to ensure a good end product. The blank sheets containing the partly tacked relective material can accordingly be mass produced at a factory and then sent to different retail outlets where the embossing operation can be carried out according to the requirements of a particular customer without the need for the embosser first having to take care that the sheet and blank are in fact in the exact required interrelationship.

3

The reason why the sheets are only partly tacked to the plate is to ensure that the cut out parts do not adhere to the blank when they have to be removed from the plate after the embossing operation.

A problem found with the aforesaid arrangement is that in those instances where the blank plates and partly tacked sheets have to be held over for a period of time before they are embossed, the adhesive on the rest of the sheet often becomes activated spontaneously which of course can cause the cut out parts of the sheet to stick to the plate after the embossing operation from where they then have to be removed, usually with substantial difficulty.

Another problem which is also encountered with this known arrangement, is that the partly tacked sheet sometimes becomes dislocated from the blank plate prior to the embossing operation.

It is accordingly an object of this invention to provide a method and means of embossing a plate, particularly a vehicle registration plate, with which the aforesaid problems may be overcome or at least minimised.

According to the invention a method for the embossing of plates, particularly vehicle registration plates, is provided which includes the steps of providing a blank plate and a sheet of a material of which the intended operative face is of a contrasting colour relative to that of the plate, and of which the opposite face contains an activatable adhesive, the sheet being of the exact size and configuration which it is intended to have in the finally embossed plate; locating the sheet on the plate in the exact position it is to occupy on the finally embossed plate; embossing the required characters in the plate in a manner so that the sheet material is cut through all along the peripheries of the embossed characters; removing the cut out parts of the sheet from the plate; and activating the adhesive in a manner to cause the sheet to adhere to the plate.

It will be appreciated that with this arrangement the party (usually the retailer) who has to do the embossing operation can be provided with batches of blank plates and sheet material which such a party then merely nas to oring togetner in pairs in the required interrelationship prior to the embossing operation. Such arrangement can accordingly obviate the problems which are referred to above as occuring with the existing arrangements.

Further according to the invention the blank plate is provided with a retaining formation which exactly demarcates the area on the plate on which the sheet has to be located prior to the embossing operation.

Such retaining formation preferably comprises a rim which extends around the outer periphery of the plate.

It will be appreciated that the invention also includes within its scope the combination of a plate and sheet of the aforesaid configuration.

Further according to the invention the adhesive on the sheet is heat sensitive and the step of activating the adhesive comprises heating the embossed plate and its overlying sheet to the required temperature.

Preferably such heating is carried out while the plate and sheet are held in a condition of reduced pressure in a manner which causes the sheet to be sucked onto the plate.

Further according to the invention the sheet is of a light reflective material and the plate is pre-painted a particular colour, such as black, for example.

Still further according to the invention the embossing of the plate and sheet and the subsequent heating thereof are carried out in a manner and with apparatus similar to that disclosed in the aforesaid South African Patent no. 83/6064.

One embodiment of the invention will now be described by way of example with reference to the enclosed drawings, wherein:

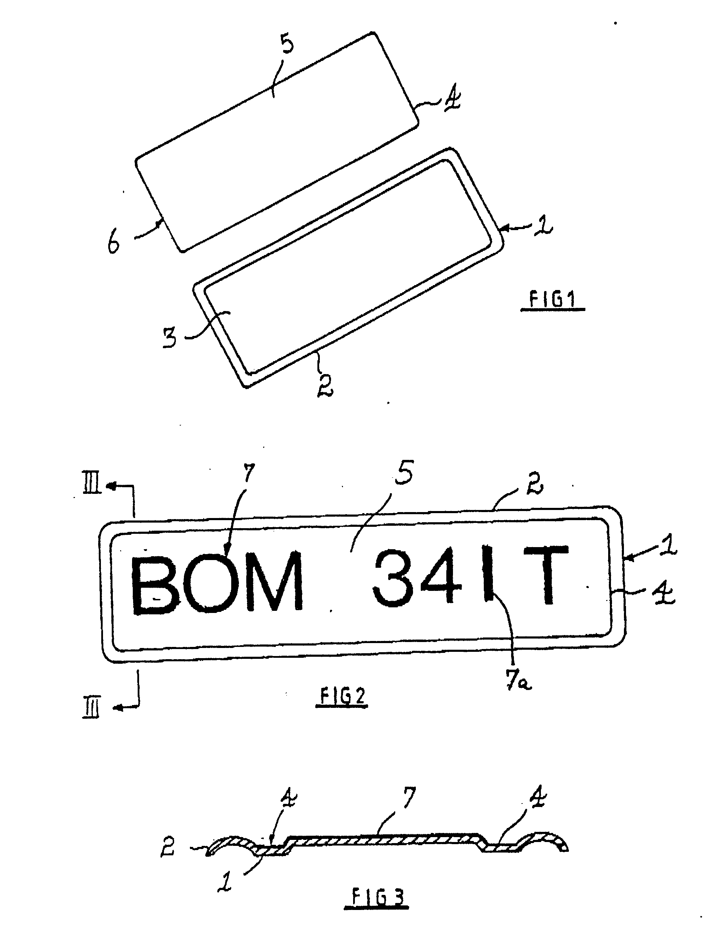

Figure 1 is an exploded diagrammatic perspective view of a blank plate and sheet according to the invention;

Figure 2 is a diagrammatic plan view of an embossed plate according to the invention;

Figure 3 is a cross section of the plate of figure 2 as seen along lines III:III in figure 2; and

Figures 4 to 6 are diagrammatic perspective views of apparatus used in performing the method of the invention.

In this embodiment of the invention a blank plate 1 is provided, which is prepainted black and which is intended as a vehicle registration plate. Plate 1 is of thin gauge metal and includes a peripherally extending rim 2 which defines an enclosed area 3 of predetermined size and configuration.

Also provided is a sheet 4 which is of a light reflective material. The one face 5 of sheet 4 defines the intended operative face of the registration plate, while the opposite face 6 is coated with a heat sensitive adhesive. Sheet 4 is of such size and configuration that it can fit exactly onto the area 3 on plate 1 so that the outer edge of sheet 4 abuts the inside edge of rim 2 all along its periphery.

8

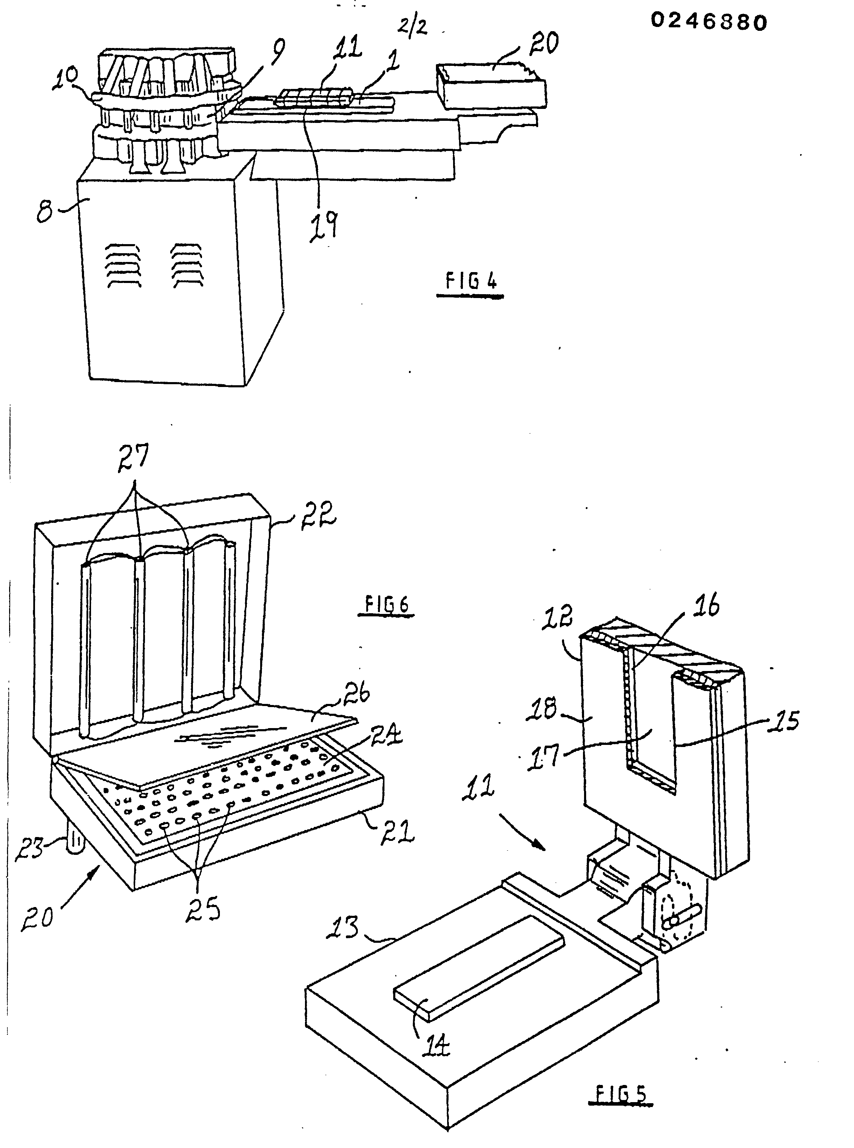

In order to emboss characters (generally indicated as 7) in plate 1, a press 8 (figure 4) is employed which is similar to the press utilised for the embossing operation in the aforesaid S A Patent no. 83/6064.

Press 8 includes a hydraulically movable press member 9 which is adapted to trap a work piece between it and a stationary press member 10 during the embossing operation.

The dies 11 which are employed for the embossing operation are also similar to those disclosed in aforesaid S A patent no. 83/6064. One of these is shown in detail in figure 5 with parts broken away.

Dies 11 each comprises two pivotally connected die members 12 and 13 between which plate 1 can be sandwiched.

Die member 13 includes a raised formation or punch 14 which corresponds in size and configuration to one of the characters 7a intended to be embossed in plate 1. Punch 14 is adapted on closing of members 12 and 13 onto each other to pass into a recess 15 provided in member 12.

The inner end of recess 15 includes all around its periphery a knife edge 16 which can co-operate with punch 14 to cut through the material of reflective sheet 4.

The floor 17 of recess 15 may be lined with a resiliently flexible material such as rubber which is intended to facilitate the removal of that part of sheet 4 which is cut out above an embossed character 7. The operative face 18 of member 12 is also lined with a resiliently flexible material such as rubber, for example, which can yield during the embossing operation.

In operation sheet 4 is located onto area 3 of plate 1 to overlie it exactly, i.e. so that the outer edge of sheet 4 abuts the inside edge of rim 2 all along its periphery. The required number and types of dies 11 necessary for the particular legend to be embossed in plate 1 are then clipped in the required sequence onto plate 1 and its overlying sheet 4, and the assembled work piece located on a tray 19 (figure 4) which is adapted to slide along a track into a gap defined between press members 9 and 10 when press 8 is in the non-operative position.

Tray 19 is passed into the said gap, and press 8 activated to cause press members 9 and 10 to trap the work piece between them and to cause characters 7 to be embossed into the material of plate 1. At the same time the knife edge 16 of each die 11 cuts through the material of sheet 4 all along the peripheries of the embossed characters 7.

When tray 19 is removed from press 8 after the embossing operation, and dies 11 opened, the aforesaid cut out parts of sheet 4 which are found to adhere to the operative faces of punches 14 can be removed therefrom with relative ease. Because the cut out apertures in sheet 4 each engages its associated embossed character 7, sheet 4 remains in the required interrelationship with the embossed plate 1.

Plate 1, of which the operative face now constitutes the raised embossed black characters 7 projecting through correspondingly shaped apertures in sheet 4, is then passed to a heater 20 (figure 4), which is shown in more detail in figure 6, and which is similar to the heater disclosed in the aforesaid S A Patent no. 83/6064.

Heater 20 comprises a compartment 21 which can be closed off by means of a lid 22.

Compartment 21 is connected to one end of a tube 23 of which the other end is connectable to a vacuum pump or the like by means of which the pressure inside compartment 21 can be reduced. Applicant has found a pump which can draw a vacuum of approximately 70Kpa in two minutes in compartment 21 suitable.

Compartment 21 is provided towards its open end with a platform 24 which includes a plurality of apertures 25 through which air from above platform 24 can be sucked out from below platform 24.

A thin sheet 26, which is of resiliently flexible material, such as rubber, for example, is pivotally connected along one of its edges to the upper end of

12

compartment 21. When sheet 26 is pivoted onto platform 24 it can be sucked onto it when suction is applied to compartment 21 in the aforesaid manner.

Lid 22 is provided on its inside with four quarts lamps 27, which, when switched on, can increase the temperature of compartment 21 to a pre-determined required level. Applicant has found an arrangement which can increase the temperature inside compartment 21 to approximately 70-100°C in 15 sec, appropriate.

After the embossing operation the embossed plate 1 and sheet 4 are located in heater 20 on platform 24; sheet 26 pivoted into engagement with them; lid 22 closed; suction applied to outlet 23; and lamps 27 switched on for the required period of time. Sheet 26 is accordingly sucked firmly onto plate 1 and sheet 4, so causing the latter to be pressed firmly down onto plate 1. At the same time the increase in temperature in compartment 21 caused by burning lamps 27, activates the adhesive on the back of sheet 4 so that sheet 4 becomes firmly secured to plate 1.

After plate 1 and sheet 4 have been treated in the said manner in heater 20, the pump and lamps 27 are switched off and the final product., comprising the embossed plate, removed as soon as the temperature thereof had decreased sufficiently ffor it to be handled safely.

Applicant has found that the method according to the invention can produce an excellent product, even when using relatively unskilled labour for the embossing operation.

It will also be appreciated that the method and system of the invention can obviate., or at least minimise, the problems encountered with the existing arrangements referred to above.

It will be appreciated further that there are no doubt many variations in detail possible with an embossing method, system, apparatus and articles according to the invention without departing from the scope of the appended claims.

14

## CLAIMS

1.

A method for the embossing of a plate, particularly a vehicle registration plate, which includes the steps of providing a blank plate and a sheet of a material of which the intended operative face is of a contrasting colour relative to that of the plate, and of which the opposite face contains an activatable adhesive, the sheet being of the exact size and configuration which it is intended to have in the embossed plate; locating the sheet on the plate in the exact position it is to occupy on the finally embossed plate; embossing the required characters in the plate in a manner so that the sheet material is cut through all along the peripheries of the embossed characters; removing the cut out parts of the sheet from the plate; and activating the adhesive in a manner to cause the sheet to adhere to the plate.

2.

The method of claim 1 wherein the blank plate includes a retaining formation which exactly demarcates the area on the plate on which the sheet has to be located prior to the embossing operation.

3.

The method of claim 2 wherein the retaining formation comprises a rim which extends arround the outer periphery of the plate.

4.

The method of any one of the preceding claims wherein the adhesive on the sheet is heat-activatable and wherein the step of activating the adhesive comprises heating the embossed plate and its overlying sheet to a predetermined temperature.

5.

The method of claim 4 wherein the heating is carried out while the plate and sheet are held in a condition of reduced pressure in a manner which causes the sheet to be sucked onto the plate.

6.

The method of any one of the preceding claims wherein the sheet is of a light reflective material and the plate is pre-painted a particular colour, such as black, for example.

7. The method of any one of the preceding claims, wherein the embossing of the plate and sheet and the subsequent heating thereof are carried out in a manner and with apparatus similar to that disclosed in South African Patent No. 83/6064.

8. The combination of a blank plate intended to be embossed, particularly a vehicle registration plate, and a sheet of a material of which the intended operative face is of a contrasting colour relative to that of the plate, and the opposite face contains an activatable adhesive, the sheet having the exact size and configuration which it is intended to have in the embossed plate.

9. The combination of claim 8, wherein the blank plate includes a retaining formation which exactly demarcates the area on the plate on which the sheet has to be located prior to the embossing operation.

10. The combination of claim 9, wherein the retaining formation comprises a rim which extends around the outer periphery of the plate.

11. The combination of any one of claims 8 to 9, wherein the adhesive is heat-activatable.

12. The combination of any one of claims 8 to 11, wherein the blank is prepainted a particular colour and the sheet is of a light-reflective material.

FIG1

BOM 341 T

FIG2

FIG3

2/2

0246880

FIG 4

FIG 6

FIG 5